# EUROPÄISCHE PATENTSCHRIFT

(11) **EP 3 280 989 B1**
(45) Veröffentlichungstag und Bekanntmachung des Hinweises auf die Patenterteilung: **18.11.2020**
(21) Anmeldenummer: 16713814.8
(22) Anmeldetag: 24.03.2016
(51) Int. Cl.: G07C 5/00, B60L 53/31, H04W 4/46, B60L 3/00, B60L 53/66, G01M 17/007, H04W 4/44

(54) **VERFAHREN ZUR FEHLERDIAGNOSE FÜR EIN KRAFTFAHRZEUG**
METHOD FOR MALFUNCTIONS DIAGNOSIS IN CARS
PROCÉDÉ DE DIAGNOSTIC DE DÉFAILLANCES DANS LES VOITURES

(30) Priorität: 07.04.2015 DE 102015206134
(43) Veröffentlichungstag der Anmeldung: 14.02.2018
(73) Patentinhaber: Bayerische Motoren Werke Aktiengesellschaft, 80809 München (DE)
(72) Erfinder: GÖNNER, Marcus, 85221 Dachau (DE); SAALFRANK, Michael, 80686 München (DE); ZÖLCH, Rüdiger, 85764 Oberschleissheim (DE)
(86) Internationale Anmeldenummer: PCT/EP2016/056520
(87) Internationale Veröffentlichungsnummer: WO 2016/162220

(56) Entgegenhaltungen:
- EP-A1- 1 868 145
- EP-A1- 1 868 145
- WO-A2-2013/057587
- KR-A- 20100 117 861
- US-A1- 2006 142 908
- US-A1- 2006 142 908
- US-A1- 2007 233 341
- US-A1- 2007 233 341
- US-A1- 2014 277 909
- Turnewj: "Snap-On Microscan User Manual", , 27 September 2010 (2010-09-27), XP055490275, Retrieved from the Internet: URL:https://www.snapon.com/display/1060/MI CROSCAN/MicroscanManual_US.pdf [retrieved on 2018-07-04]

## Beschreibung

Die vorliegende Erfindung betrifft ein Verfahren zur Fehlerdiagnose für ein Kraftfahrzeug sowie ein Kraftfahrzeug.

Moderne Kraftfahrzeuge weisen eine große Anzahl miteinander vernetzter Steuergeräte auf. Bei einem solchen komplexen Gesamtsystem ist es wichtig, auftretende Fehler rasch und zuverlässig lokalisieren und beheben zu können. Es sind dazu im Stand der Technik zahlreiche Verfahren zur Fehlerdiagnose bekannt. Hierzu können Steuergeräte eingerichtet sein, eine Eigendiagnose durchzuführen. Die so eingerichteten Steuergeräte sind also in der Lage, ihre Funktionsfähigkeit zu prüfen und eigene Fehler zu detektieren. Informationen über die Eigendiagnose, z.B. ein Fehlerprotokoll, können dann in einem Fehlerspeicher abgelegt werden. Dieser Fehlerspeicher kann lokal in einem Steuergerät oder zentral in einem zentralen Steuergerät vorgesehen sein. Es ist auch bekannt, dass Steuergeräte eine Fehlerdiagnose bei anderen Steuergeräten durchführen. Ebenso ist bekannt, dass Steuergeräte Datenverbindungen des Kraftfahrzeugs, insbesondere Datenbussysteme, diagnostizieren. Weiter sind Fahrzeuge häufig mit Diagnoseschnittstellen ausgerüstet. Diese erlauben den Anschluss eines fahrzeugexternen Diagnosegeräts an einen Datenbus des Kraftfahrzeugs. Das an die Diagnoseschnittstelle des Kraftfahrzeugs angebundene Diagnosegerät kann eine Fehlerdiagnose der Steuergeräte und der Datenverbindungen des Kraftfahrzeugs durchführen.

WO 2013/057587 A2 betrifft das Laden von Elektrofahrzeugen und beschreibt die Übertragung von Fahrzeugdaten, darunter Fehlercodes der Eigendiagnose des Fahrzeugs, an einen Telematikdienst.

Moderne Kraftfahrzeuge bieten ihrem Nutzer eine Vielzahl von Funktionen, die durch den Datenaustausch mit fahrzeugexternen Einheiten ermöglicht werden. Es wird in diesem Zusammenhang häufig davon gesprochen, dass moderne Fahrzeuge vernetzt sind. Hierzu können Fahrzeuge Sende- und Empfangseinheiten aufweisen, die eine drahtlose Datenkommunikation ermöglichen, z.B. über Mobilfunk (GSM / GPRS / EDGE, UMTS / HSPA, LTE), WLAN, Bluetooth, NFC, etc. Es ergeben sich hierdurch zahlreiche Anwendungen. So können beispielsweise Mobilgeräte (z.B. Smartphones) des Fahrers mit dem Fahrzeug gekoppelt werden. Das Fahrzeug kann Daten mit anderen Fahrzeugen und / oder mit Einrichtungen der Verkehrsinfrastruktur austauschen (Car-to-car, car-to-x). Das Fahrzeug kann Daten von Servern eines Dienstanbieters beziehen. Bei Elektrofahrzeugen, deren Batterie mittels einer Kabelverbindung geladen werden können, umfasst das Ladekabel in der Regel neben dem stromführenden Kabel noch ein Datenkabel, das dem Austausch von Daten zwischen dem Fahrzeug und der Ladestation dient.

Moderne Kraftfahrzeuge können also auf vielfältige Weise vernetzt sein. In den fahrzeugexternen Einheiten, mit denen das Fahrzeug kommuniziert, sowie in der Datenverbindung selbst können Fehler auftreten. Passiert dies, tritt also ein Fehler außerhalb des Fahrzeugs auf, so ist die Funktionsweise der fahrzeuginternen Einheit beeinträchtigt. Verfügt beispielsweise ein Fahrzeug über eine Mobilfunkeinheit zum Datenaustausch über ein Mobilfunknetz und tritt in dem Mobilfunknetz ein Fehler auf, der zum Abbruch der Mobilfunkverbindung führt, so ist die Funktionsweise der Mobilfunkeinheit des Fahrzeugs beeinträchtigt. Zwar kann im Rahmen der vorstehend beschriebenen herkömmlichen Eigendiagnose in einem solchen Fall kein Fehler festgestellt werden. Dennoch kann es vorkommen, dass z.B. aufgrund einer Beschreibung des aufgetretenen Fehlers durch einen Nutzer des Fahrzeugs die Mobilfunkeinheit repariert oder ausgetauscht wird, obwohl sie voll funktionsfähig ist.

Es stellt sich die Aufgabe, ein Verfahren anzugeben, das eine zuverlässige Fehlerdiagnose bei vernetzten Fahrzeugen erlaubt. Die Aufgabe besteht weiterhin darin, ein für die Durchführung dieses Verfahrens eingerichtetes System umfassend ein Kraftfahrzeug anzugeben.

Die Aufgabe wird gelöst bei einem Verfahren mit den Merkmalen des Patentanspruchs 1 und einem System umfassend ein Kraftfahrzeug mit den Merkmalen des Anspruchs 5. Vorteilhafte Weiterbildungen der Erfindung sind Gegenstände der abhängigen Ansprüche.

Das erfindungsgemäße Verfahren zur Fehlerdiagnose ist geeignet für ein Kraftfahrzeug, welches eine erste Funktionseinheit umfasst. Die erste Funktionseinheit ist also eine fahrzeuginterne Funktionseinheit. Die erste Funktionseinheit ist eingerichtet, mit einer zweiten Funktionseinheit zusammenzuwirken, wobei die zweite Funktionseinheit nicht Bestandteil des Kraftfahrzeugs ist. Die zweite Funktionseinheit ist also eine fahrzeugexterne Funktionseinheit. Bei nicht von der beanspruchten Erfindung umfassten Beispielen bedeutet dies allerdings nicht, dass die zweite Funktionseinheit nicht räumlich innerhalb des Fahrzeugs angeordnet sein kann. Die zweite Funktionseinheit kann bei solchen Beispielen beispielsweise ein Mobilgerät (z.B. Smartphone) eines Nutzers des Fahrzeugs sein, welches der Nutzer natürlich in den Fahrzeuginnenraum einbringen kann. Die zweite Funktionseinheit kann bei solchen Beispielen beispielsweise eine Datenkommunikationseinrichtung eines anderen Fahrzeugs sein, welche mit der Datenkommunikationseinrichtung des (eigenen) Kraftfahrzeugs (also mit der ersten Funktionseinheit) Daten über eine Car-to-Car-Datenverbindung austauscht. Die zweite Funktionseinheit kann bei solchen Beispielen insbesondere beispielsweise eine Mobilfunk-Station sein. Die zweite Funktionseinheit ist erfindungsgemäß eine Ladesäule eines Energieversorgungsnetzes, mit welcher das Kraftfahrzeug über ein eine Datenverbindung umfassendes Ladekabel verbunden ist. Die zweite Funktionseinheit kann beispielsweise eine Ladeplatte zum induktiven Laden des Kraftfahrzeugs sein. Die erste und zweite Funktionseinheit sind mittels einer Datenverbindung miteinander verbindbar.

In einem ersten Schritt des erfindungsgemäßen Verfahrens wird ein im Zusammenwirken der ersten und der zweiten Funktionseinheit aufgetretener oder auftretender Fehler erkannt. Es wird mit anderen Worten das Vorliegen eines Fehlers als solches erkannt. Hierfür sind weitergehende Informationen über den Fehler noch nicht vonnöten. Es wird also lediglich festgestellt, dass die beiden Funktionseinheiten nicht ordnungsgemäß zusammenwirken. Hierzu muss die Datenverbindung nicht bestehen. Im Gegenteil kann ein Nichtbestehen der Datenverbindung einen Fehler darstellen, den es zu erkennen gilt. Das Vorliegen des Fehlers kann erkannt werden, indem die erste Funktionseinheit eine Eigendiagnose durchführt. Das Vorliegen des Fehlers kann auch erkannt werden, indem eine weitere Funktionseinheit des Kraftfahrzeugs, beispielsweise ein zentrales Steuergerät, oder eine andere Diagnosevorrichtung eine Fehlerdiagnose der ersten Funktionseinheit durchführt.

In einem zweiten Schritt des erfindungsgemäßen Verfahrens wird eine Fehlerquelle sowie bevorzugt eine Fehlerursache und / oder ein Fehlerverlauf des Fehlers festgestellt. Dieser Schritt kann durch dieselbe Einheit durchgeführt werden, die schon den ersten Verfahrensschritt durchgeführt hat, also beispielsweise durch die erste Funktionseinheit im Rahmen einer Eigendiagnose.

Eine Fehlerquelle ist eine funktional-örtliche Information zu dem Fehler. Mit anderen Worten bezeichnet die Fehlerquelle, wo der Fehler aufgetreten ist. Eine mögliche Fehlerquelle kann beispielsweise eine fehlerhafte Steckverbindung sein. Eine mögliche Fehlerquelle kann auch eine abgebrochene Mobilfunkverbindung sein. Eine mögliche Fehlerquelle kann auch die zweite Funktionseinheit sein, wenn der Fehler in deren Funktionsbereich liegt, wenn also mit anderen Worten der Fehler in der zweiten Funktionseinheit entstanden ist.

Eine Fehlerursache ist eine funktional-inhaltliche Information zu dem Fehler. Mit anderen Worten bezeichnet die Fehlerursache, worin der Fehler besteht. Eine mögliche Fehlerursache könnte beispielsweise in einem (nicht vorgesehenen) Verbindungsabbruch durch die zweite Funktionseinheit bestehen. Die Fehlerursache kann der ersten Funktionseinheit durch die zweite Funktionseinheit mitgeteilt worden sein. Eine mögliche Fehlerursache könnte beispielsweise in einem zu niedrigen Batteriestand der zweiten Funktionseinheit bestehen. Bevor die zweite Funktionseinheit das Zusammenwirken aufgrund ihres niedrigen Batteriestands einstellt, könnte sie eine entsprechende Information an die erste Funktionseinheit übermitteln.

Vorzugsweise können mehrere Fehlerursachen festgestellt werden. Bei gleichzeitigem Auftreten mehrerer Fehler können so die Fehlerursachen aller aufgetretenen oder auftretenden Fehler festgestellt werden. Es ist aber auch denkbar, dass ein einziger Fehler mehrere Fehlerursachen hat. Diese können voneinander verschieden sein. Mit anderen Worten könnten also mehrere Fehlerursachen zu demselben Fehler geführt haben. Die mehreren Fehlerursachen könnten einander aber auch beinhalten. Dies soll anhand eines nicht von der beanspruchten Erfindung umfassten Beispiels erläutert werden: Es sei angenommen, dass ein Mobilgerät mittels einer Kabelverbindung mit der ersten Funktionseinheit des Kraftfahrzeugs verbunden ist. Ein Fehler tritt auf, weil ein Steckkontakt der Kabelverbindung lose ist. In diesem Beispiel könnte eine erste Fehlerursache die Angabe "Verbindung abgebrochen" beinhalten. Eine zweite Fehlerursache könnte die Angabe "Steckverbindung lose" beinhalten.

Ein Fehlerverlauf kann die durch die erste und / oder zweite Funktionseinheit durchgeführten Einzelschritte umfassen, die zu dem Auftreten des Fehlers geführt haben bzw. die dem Auftreten vorangegangen sind. Ein Fehlerverlauf kann Softwarebefehle, Datenspeichereinträge und über die Datenverbindung ausgetauschte Botschaften enthalten. Ein solcher Fehlerverlauf kann auch als "Logdatei" bezeichnet werden. Der Vorgang des Feststellens uns Speicherns des Fehlerverlaufs kann auch als "Logging" bezeichnet werden. Es kann vorgesehen sein, dass der Fehlerverlauf in jedem Fall festgestellt wird, um eine spätere Auswertung des Fehlerverlaufs zu ermöglichen. Mit besonderem Vorteil wird der Fehlerverlauf dann festgestellt, wenn das Feststellen der Fehlerquelle und der Fehlerursache fehlgeschlagen ist. In diesem Fall kann der Fehlerverlauf eine spätere Identifikation der Fehlerquelle und / oder der Fehlerursache ermöglichen.

In einem dritten Schritt des erfindungsgemäßen Verfahrens wird die Fehlerquelle sowie bevorzugt die Fehlerursache und / oder der Fehlerverlauf des Fehlers in einem Fehlerspeicher gespeichert. Der Fehlerspeicher umfasst bevorzugt ein nichtflüchtiges Speichermedium, welches zur dauerhaften Speicherung von Daten geeignet ist. Indem die Fehlerquelle sowie bevorzugt die Fehlerursache und / oder der Fehlerverlauf des Fehlers in dem Fehlerspeicher gespeichert werden, können diese Daten zu einem späteren Zeitpunkt ausgewertet werden. Dies kann beispielsweise in einer Werkstatt erfolgen, in welcher der Fehlerspeicher ausgelesen und dessen Inhalt ausgewertet wird. Der Inhalt des Fehlerspeichers kann auch über eine Datenverbindung übertragen werden. Dies wird nachstehend noch ausführlicher erläutert.

Die Erfindung ermöglicht es, Fehler zu erfassen, die außerhalb des eigenen Kraftfahrzeugs aufgetreten sind. Sie ermöglicht somit eine gezielte spätere Fehlersuche (beispielsweise in einer Werkstatt) und verhindert, dass an sich voll funktionsfähige Einheiten des Kraftfahrzeugs gewartet oder ausgetauscht werden.

Erfindungsgemäß umfasst der Schritt des Feststellens der Fehlerquelle ein Feststellen, ob die Fehlerquelle außerhalb der ersten Funktionseinheit liegt oder nicht. Es kann vorkommen, dass die genaue Fehlerquelle überhaupt nicht festgestellt werden kann. Wie vorstehend ausgeführt kann es sinnvoll sein, dann zumindest den Fehlerverlauf festzustellen und zu speichern ("Logging"). Es kann aber auch vorkommen, dass zwar die genaue Fehlerquelle nicht festgestellt werden kann, dass aber ausgeschlossen werden kann, dass der Fehler in der ersten Funktionseinheit aufgetreten ist. Mit anderen Worten liegt die Fehlerquelle dann mit Sicherheit außerhalb des Fahrzeugs, beispielsweise in der zweiten Funktionseinheit oder in der Datenverbindung. Der Vorteil, wenn die so eingegrenzte Fehlerquelle festgestellt und gespeichert wird, liegt darin, dass bei einem nachfolgenden Werkstattaufenthalt oder einer Ferndiagnose nicht eine (tatsächlich überflüssige) Fehlersuche innerhalb des Fahrzeugs durchgeführt werden muss. Ein Service-Techniker kann also bereits durch Auslesen des Fehlerspeichers feststellen, dass das Fahrzeug als solches keinen Fehler aufweist. Eine unnötige Wartung und / oder ein Tausch von Fahrzeugkomponenten, insbesondere der ersten Funktionseinheit, kann so vermieden werden.

Es ist erfindungsgemäß vorgesehen, dass auch die zweite Funktionseinheit eine (Eigen-)Fehlerdiagnose durchführt. Diese könnte ausgelöst werden, indem die zweite Funktionseinheit selbsttätig den im Zusammenwirken der ersten und der zweiten Funktionseinheit aufgetretenen oder auftretenden Fehler erkennt. Erfindungsgemäß bekommt die zweite Funktionseinheit einen Befehl zur Durchführung einer Fehlerdiagnose von dem Kraftfahrzeug übermittelt, nachdem dieses den im Zusammenwirken der ersten und der zweiten Funktionseinheit aufgetretenen oder auftretenden Fehler erkannt hat. Stellt die zweite Funktionseinheit im Rahmen der von ihr durchgeführten Fehlerdiagnose eine Fehlerquelle und / oder eine Fehlerursache und / oder einen Fehlerverlaufs des Fehlers fest, so ist vorgesehen, dass diese Daten von der zweiten Funktionseinheit zu dem Kraftfahrzeug übertragen werden, sodass diese dort in dem Fehlerspeicher abgespeichert werden können. Dies bietet den Vorteil, dass in dem Fehlerspeicher des Kraftfahrzeugs auch Erkenntnisse über den Fehler abgelegt und für eine spätere Auswertung nutzbar gemacht werden können, die nur außerhalb des Kraftfahrzeugs gewonnen werden konnten, beispielsweise weil sie einen in der zweiten Funktionseinheit liegenden Fehler betreffen.

In weiterer Ausgestaltung umfasst das Verfahren einen Schritt eines Empfangens einer Anweisung zum Auslösen der Fehlerdiagnose. Die Anweisung zum Auslösen der Fehlerdiagnose kann auch als "Diagnosebefehl" bezeichnet werden. Mit anderen Worten löst der Empfang der Anweisung die Durchführung des erfindungsgemäßen Verfahrens aus.

Der Diagnosebefehl kann von einem Nutzer des Kraftfahrzeugs gegeben werden. Hierzu kann der Nutzer eine Eingabevorrichtung des Kraftfahrzeugs nutzen. Beispielsweise kann der Nutzer in einem Bedienmenü, welches mittels eines Touchscreens des Fahrzeugs angezeigt und bedient wird, eine Option "Fehlerdiagnose" auswählen. Es ist auch denkbar, dass der Fahrer eine fahrzeugexterne Eingabevorrichtung nutzt, beispielsweise sein Smartphone oder einen Heimcomputer. Auf solchen Geräten kann beispielweise eine vom Fahrzeughersteller bereitgestellte Software-Applikation ausgeführt werden, welche eine Eingabe des Diagnosebefehls erlaubt. Über eine Datenverbindung zum Fahrzeug, die beispielsweise über das Internet, WLAN und / oder Mobilfunk realisiert sein kann, kann die Anweisung an das Fahrzeug übermittelt werden. Es kann vorgesehen sein, dass der Nutzer sich in geeigneter Weise authentifizieren (also als berechtigter Nutzer zu erkennen geben) muss, um den Diagnosebefehl geben zu können. Beispielsweise kann der Nutzer die Eingabe des Diagnosebefehls dann vornehmen, wenn er selber eine (möglicherweise wiederholt auftretende) Fehlfunktion, z.B. einen Abbruch der Mobilfunkverbindung, feststellt.

Der Diagnosebefehl kann auch von einem befugten Service-Techniker gegeben werden. Hierzu kann beispielsweise die Auslösung der Fehlerdiagnose durchgeführt werden, indem der Service-Techniker den Diagnosebefehl mittels eines Diagnosegeräts gibt, welches über eine Diagnoseschnittstelle mit dem Fahrzeug verbindbar ist. Der Service-Techniker könnte den Diagnosebefehl auch mittels eines Servicemenüs des Fahrzeugs geben, wobei bevorzugt vorgesehen sein kann, dass sich die Möglichkeit zur Eingabe des Diagnosebefehls in einem der Benutzung durch Service-Techniker vorbehaltenen Bereich des Servicemenüs befindet. Der Diagnosebefehl kann von einem Service-Techniker auch aus der Ferne gegeben werden. Hierzu kann vorgesehen sein, dass der Service-Techniker eine Datenverbindung zu dem Fahrzeug aufbauen kann (beispielsweise über das Internet, WLAN und / oder Mobilfunk) und die Anweisung über diese Datenverbindung zum Fahrzeug übermittelt werden kann ("Remote-Diagnose").

Der Diagnosebefehl kann auch automatisiert im Rahmen einer routinemäßigen Fehlerdiagnose gegeben werden. Beispielsweise kann vorgesehen sein, dass das Fahrzeug in gewissen Zeitintervallen (beispielsweise alle 24 Stunden), bei jedem Start, bei jedem Abstellen und / oder nach einer längeren (beispielsweise mindestens fünftägigen) Nichtnutzung eine Fehlerdiagnose durchführt.

In weiterer vorteilhafter Ausgestaltung wird eine Anweisung zum Übertragen eines Inhalts des Fehlerspeichers empfangen und der Inhalt des Fehlerspeichers übertragen. Die Anweisung zum Übertragen des Inhalts des Fehlerspeichers kann auf die gleichen Arten gegeben und empfangen werden, wie dies vorstehend für die Anweisung zum Auslösen der Fehlerdiagnose beschrieben wurde. Insbesondere kann die Anweisung von einem Service-Techniker oder im Rahmen einer automatisierten Fehlerdiagnose gegeben werden. Der Inhalt des Fehlerspeichers umfasst die im dritten erfindungsgemäßen Verfahrensschritt gespeicherten Daten, also die Fehlerquelle sowie bevorzugt die Fehlerursache und / oder den Fehlerverlauf ("Logdatei") des Fehlers. Dieser Inhalt des Fehlerspeichers soll zur weiteren Auswertung an einer geeigneten Stelle zur Verfügung stehen. Hierzu wird er aus dem Fehlerspeicher auf einen fahrzeugexternen Datenspeicher übertragen. Der Inhalt kann über eine Datenverbindung übertragen werden. Diese Datenverbindung kann eine kabelgebundene Datenverbindung sein. Beispielsweise kann der Inhalt an ein Diagnosegerät übertragen werden, welche über eine Diagnoseschnittstelle mit dem Fahrzeug verbindbar ist. Der Inhalt kann auch über eine drahtlose Datenverbindung, beispielsweise eine Mobilfunk-, WLAN oder Bluetooth-Verbindung, an ein Diagnosegerät übertragen werden. Der Inhalt kann auch im Rahmen einer Remote-Diagnose übertragen werden (beispielsweise über das Internet, WLAN und / oder Mobilfunk). Nach der Übertragung kann der Inhalt des Fehlerspeichers gelöscht werden. Es kann auch vorgesehen sein, dass der Inhalt des Fehlerspeicher nicht oder erst nach einer bestimmten Zeit gelöscht wird.

Ein erfindungsgemäßes System umfasst ein Kraftfahrzeug mit einer ersten Funktionseinheit, welche eingerichtet ist, mit einer zweiten Funktionseinheit zusammenzuwirken, wobei die zweite Funktionseinheit nicht Bestandteil des Kraftfahrzeugs ist. Die erste und zweite Funktionseinheit sind mittels einer Datenverbindung miteinander verbindbar. Bei nicht von der beanspruchten Erfindung umfassten Beispielen könnte die erste Funktionseinheit ein Telematik-Steuergerät sein, welches über eine Mobilfunkverbindung Daten sendet und empfängt. Weiter umfasst das Kraftfahrzeug eine Fehlerdiagnosevorrichtung, welche eingerichtet ist, einen im Zusammenwirken der ersten und der zweiten Funktionseinheit aufgetretenen oder auftretenden Fehler zu erkennen, eine Fehlerquelle sowie bevorzugt eine Fehlerursache und / oder einen Fehlerverlauf des Fehlers festzustellen und die Fehlerquelle sowie bevorzugt die Fehlerursache und / oder den Fehlerverlauf des Fehlers in einem Fehlerspeicher zu speichern.

Die Fehlerdiagnosevorrichtung kann, muss aber nicht, eine eigenständige Funktionseinheit des Kraftfahrzeugs sein. Beispielsweise kann die Fehlerdiagnosevorrichtung Teil eines zentralen Steuergeräts des Kraftfahrzeugs sein. Erfindungsgemäß ist die Fehlerdiagnosevorrichtung an einen Datenbus des Fahrzeugs angebunden, damit sie über den Datenbus Daten mit der ersten Funktionseinheit und vorzugsweise allen weiteren Funktionseinheiten des Fahrzeugs austauschen kann, die in eine Fehlerdiagnose eingebunden sein sollen.

Vorzugsweise kann vorgesehen sein, dass die erste Funktionseinheit die Fehlerdiagnosevorrichtung umfasst. Mit anderen Worten ist die erste Funktionseinheit eingerichtet, die Fehlerdiagnose selbst durchzuführen. Diese Ausgestaltung bietet den Vorteil, dass Fehler, die in der ersten Funktionseinheit auftreten, besonders zuverlässig erfasst werden können, da die erste Funktionseinheit sie im Rahmen einer Eigendiagnose erfassen kann. Umgekehrt kann somit auch mit hoher Wahrscheinlichkeit festgestellt werden, wenn die Fehlerquelle eines aufgetretenen oder auftretenden Fehlers nicht in der ersten Funktionseinheit liegt. Hieraus kann dann geschlossen werden, dass die Fehlerquelle außerhalb der ersten Funktionseinheit liegt, also in der zweiten Funktionseinheit und / oder in der Datenverbindung.

Der Fehlerspeicher kann in einer Ausführungsform eine eigenständige Funktionseinheit des Fahrzeugs sein, welche dauerhaft mit dem Fahrzeug verbunden ist. Beispielsweise kann der Fehlerspeicher eine Festplatte sein.

In alternativer vorteilhafter Ausgestaltung umfasst die erste Funktionseinheit den Fehlerspeicher. Als Fehlerspeicher wird somit ein interner Speicher der ersten Funktionseinheit genutzt. Dies ist insbesondere dann vorteilhaft, wenn die erste Funktionseinheit die Fehlerdiagnosevorrichtung umfasst. In dieser Kombination kann die erste Funktionseinheit das erfindungsgemäße Verfahren autark durchführen.

Eine alternative Ausführungsform kann vorsehen, dass das Kraftfahrzeug eine Datenschnittstelle aufweist, wobei der Fehlerspeicher mittels der Datenschnittstelle mit der Fehlerdiagnosevorrichtung verbindbar ist. Der Fehlerspeicher kann dann also eine temporär mit dem Fahrzeug verbindbare Funktionseinheit sein. Beispielsweise kann der Fehlerspeicher ein sogenannter USB-Stick sein, also ein Datenspeicher, welcher mittels einer USB-Datenverbindung mit dem Fahrzeug verbunden werden kann. Dies kann insbesondere dann vorteilhaft sein, wenn bei der Ausführung des erfindungsgemäßen Verfahrens der Fehlerverlauf festgestellt und gespeichert wird ("Logging"), da dann besonders große Datenmengen anfallen können. Es kann mit Vorteil auch vorgesehen sein, dass der Fehlerspeicher mehrere Datenspeicher umfasst. Beispielsweise kann ein fahrzeugeigener Datenspeicher zur Speicherung der Fehlerquelle und / oder der Fehlerursache sowie zusätzlich ein zweiter, temporär mit dem Fahrzeug verbindbarer Datenspeicher zur Speicherung des Fehlerverlaufs ("Logdatei") vorgesehen sein.

Weitere Ausführungsformen der Erfindung werden nachfolgend anhand einer beispielhaften Darstellung erläutert.

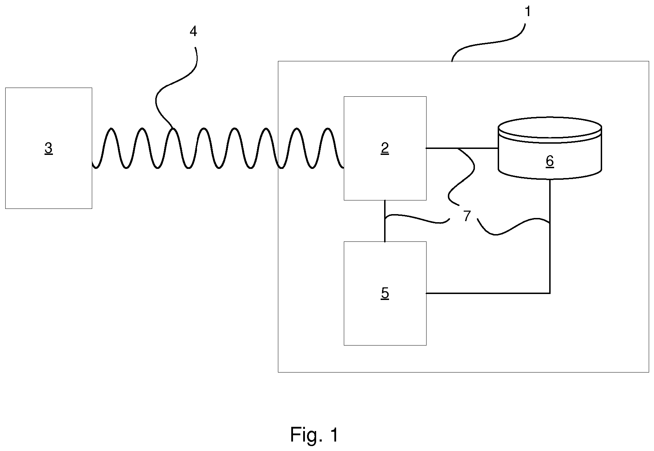

Die einzige Figur (Fig. 1) zeigt ein erfindungsgemäßes Kraftfahrzeug in einer beispielhaften Ausführungsform.

Es wird darauf hingewiesen, dass es sich bei der dargestellten Figur sowie der zugehörigen Beschreibung lediglich um Ausführungsbeispiele der Erfindung handelt. Insbesondere sind Darstellungen von Merkmalskombinationen in der Figur und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung.

Anhand der Fig. 1 sollen drei unterschiedliche beispielhafte Anwendungsbeispiele der Erfindung erläutert werden.

Fig. 1 zeigt ein Kraftfahrzeug 1. Dieses 1 verfügt über eine erste Funktionseinheit 2, eine Diagnosevorrichtung 5 und einen Datenspeicher 6. Die genannten Einheiten 2, 5, 6 sind mittels eines Datenbusses 7, beispielsweise mittels eines CAN-Busses, miteinander verbunden. Es versteht sich, dass diese beispielhafte Anordnung nicht einschränkend zu verstehen ist. So können die Einheiten 2, 5, 6 auch teilweise miteinander kombiniert sein. Beispielsweise könnte der Datenspeicher 6 ein Teil der ersten Funktionseinheit 2 oder ein Teil der Diagnosevorrichtung 5 sein. Ebenso ist es nicht zwingend, dass alle Einheiten 2, 5, 6 mittels eines Datenbusses 7 miteinander verbunden sind. Beispielsweise könnte der Datenspeicher 6 nur mittels einer direkten (Punkt-zu-Punkt-) Datenverbindung mit der Diagnosevorrichtung 5 verbunden sein. Die erste Funktionseinheit 2 ist eingerichtet, mit einer zweiten Funktionseinheit 3 zusammenzuwirken. Hierzu sind die beiden Funktionseinheiten 2, 3 mittels einer Datenverbindung 4 verbindbar.

In einer ersten beispielhaften nicht von der beanspruchten Erfindung umfassten Anwendung kann es sich bei der ersten Funktionseinheit um ein Telematik-Steuergerät 2 handeln, welches über ein Mobilfunknetz 4 mit einem Server 3 einer Verkehrsleitstelle Daten austauschen kann. Auf diese Weise können vom Fahrzeug 1 erfasste Daten, z.B. Wetterdaten, Verkehrsinformation oder andere von Sensoren des Fahrzeugs 1 erfasste Daten, an die Verkehrsleitstelle 3 weitergegeben werden. Umgekehrt können von der Verkehrsleitstelle 3 Informationen an das Fahrzeug 1 übermittelt werden, die beispielsweise vorausliegende Verkehrsereignisse (z.B. Unfall, Stau, Glatteis) betreffen können. Es soll nun angenommen werden, dass, nachdem das Zusammenwirken der Funktionseinheiten 2, 3 ordnungsgemäß funktioniert hat, die Mobilfunkverbindung abbricht. In diesem Fehlerfall wird von der Diagnosevorrichtung 5 zunächst eine Eigen-Fehlerdiagnose des Telematik-Steuergeräts 2 durchgeführt. Diese Diagnose ergibt, dass das Telematik-Steuergerät 2 einwandfrei funktionsfähig ist. Es kann somit bereits festgestellt werden, dass die Fehlerquelle außerhalb der ersten Funktionseinheit 2 liegt. Diese erste Erkenntnis könnte die Diagnosevorrichtung 5 bereits in dem Fehlerspeicher 6 speichern. In einem nächsten Schritt prüft die Diagnosevorrichtung 5, ob die Fehlerquelle in der Mobilfunkverbindung 4 liegt. Hierzu kann sie beispielsweise testen, ob mittels der Mobilfunkverbindung 4 ein anderer Empfänger als die Verkehrsleitstelle 3 erreichbar ist. Ist dies der Fall, so kann die Diagnosevorrichtung 5 feststellen, dass die Fehlerquelle nicht in der Mobilfunkverbindung 4 liegt. Es kann somit darauf geschlossen werden, dass die Fehlerquelle in der Verkehrsleitstelle 3 liegt. Es könnte sein, dass aufgrund einer in dem verwendeten Kommunikationsprotokoll vorgesehenen Fehlermeldung dem Telematik-Steuergerät 2 mitgeteilt wird, dass der Server 3 nicht erreichbar ist (z.B. "timeout"). Diese Fehlerursache kann die Diagnosevorrichtung 5 zusammen mit der festgestellten Fehlerquelle (Server 3 der Verkehrsleitstelle) in dem Fehlerspeicher 6 speichern.

Die von der Diagnosevorrichtung 5 durchgeführte Diagnose könnte auf unterschiedliche Arten ausgelöst worden sein. Sie könnte beispielsweise durch einen Befehl ausgelöst worden sein, der von einem Service-Techniker einer Werkstatt über eine Datenverbindung (beispielsweise über die Datenverbindung 4) an das Fahrzeug 1 übermittelt wurde. Sie könnte auch automatisiert ausgelöst worden sein, beispielsweise indem das Telematik-Steuergerät 2 bei festgestellter nicht ordnungsgemäßer Funktionsweise eine entsprechende Mitteilung an die Diagnosevorrichtung 5 übermittelt. Der Diagnosebefehl könnte auch von einem Fahrer des Fahrzeugs 1 über eine Benutzerschnittstelle des Fahrzeugs 1 gegeben worden sein.

In einer zweiten beispielhaften nicht von der beanspruchten Erfindung umfassten Anwendung kann es sich bei der ersten Funktionseinheit um ein Mobilgerätemodul 2 handeln. Dieses 2 dient dazu, ein Mobilgerät 3, z.B. ein Smartphone 3, mit dem Fahrzeug 1 zu verbinden. Mittels einer solchen Verbindung können dem Nutzer unterschiedliche Funktionen angeboten werden, z.B. eine Freisprechfunktion. Auch eine Nutzung der auf dem Smartphone 3 bereitgestellten Applikationen mittels einer Anzeige- und Bedienvorrichtung des Kraftfahrzeugs 1 (z.B. mittels Mirrorlink) kann auf diese Weise ermöglicht werden. Das Smartphone 3 kann mit dem Mobilgerätemodul 2 beispielsweise mittels einer Bluetooth-Verbindung 4 verbunden werden. Es soll nun wiederum angenommen werden, dass im Zusammenwirken der beiden Einheiten 2, 3 ein Fehler auftritt. Der Nutzer des Fahrzeugs 1 stellt dies fest und gibt über ein entsprechendes Bedienmenü einen Diagnosebefehl. Es kann vorgesehen sein, dass in dem Fall, dass eine Diagnose durch den Nutzer ausgelöst wird, immer ein vollständiger Fehlerverlauf des Fehlers erfasst und gespeichert wird, um eine spätere Fehersuche durch einen Service-Techniker zu ermöglichen. Die Diagnosevorrichtung 5 führt also eine Diagnose durch, bei der jeder funktionale Einzelschritt des Zusammenwirkens der Einheiten 2, 3 im Fehlerspeicher 6 gespeichert wird. Der so festgestellte und gespeicherte Fehlerverlauf kann beispielsweise enthalten:
- von dem Mobilgerätemodul 2 gesendeten und / oder empfangene Botschaften;
- Speicherinhalte eines internen Speichers des Mobilgerätemoduls 2;
- Programmschritte eines in dem Mobilgerätemodul 2 ablaufenden Softwareprogrammes.

In einer dritten beispielhaften Anwendung der Erfindung kann es sich bei der ersten Funktionseinheit um ein Ladegerät 2 eines Elektrofahrzeugs 1 handeln. Das Ladegerät 2 ist über ein Ladekabel 4 mit einer Ladesäule 3 verbunden. Das Ladekabel 4 ist so ausgestaltet, dass über das Ladekabel 4 Informationen ausgetauscht werden können. Hierzu kann neben einem den Ladestrom führenden Stromkabel ein separates Kommunikationskabel vorgesehen sein. Es sind aber auch Techniken bekannt, Daten über das Stromkabel zu übermitteln, beispielsweise indem ein Datensignal dem Ladestrom aufgeprägt wird ("Powerline communications"). Das Ladegerät 2 und die Ladesäule 3 tauschen beispielsweise Informationen über eine maximale Stromstärke des Ladestroms oder einen Ladezustand einer Batterie des Fahrzeugs 1 aus. Es kann vorgesehen sein, dass die Diagnosevorrichtung 5 während jedes Ladevorgangs fortlaufend eine Diagnose durchführt. Bricht der Ladevorgang unerwartet ab, so wird zunächst festgestellt, ob die Fehlerquelle außerhalb des Ladegeräts 2 liegt. Dies soll im vorliegenden Beispiel angenommen werden. Weiter wird festgestellt, ob die Fehlerquelle im Ladestecker, also in der Steckverbindung des Ladekabels 4 mit dem Elektrofahrzeug 1 liegt. Dies soll vorliegend nicht der Fall sein. Weiter soll angenommen werden, dass zwar unerwartet der Ladevorgang abgebrochen ist (dass also ein Fehler im Zusammenwirken der ersten 2 und zweiten Funktionseinheit 3 aufgetreten ist), dass aber die Datenverbindung 4 des Ladekabels nach wie vor funktioniert. Die Diagnosevorrichtung 5 veranlasst im Verlauf der Diagnose das Ladegerät 2, über die Verbindung 4 einen Diagnosebefehl an die Ladesäule 3 zu senden. Diese 3 führt ihrerseits eine Eigendiagnose durch, bei der festgestellt wird, dass die Steckverbindung intakt ist, dass aber ein Fehler im Versorgungsnetz vorliegt. Diese Information meldet die Ladesäule 3 über die Verbindung 4 an das Ladegerät 2 zurück, von wo sie über den Bus 7 an die Diagnosevorrichtung 5 weitergegeben wird. Die Diagnosevorrichtung speichert die festgestellte Fehlerquelle ("Versorgungsnetz") sowie ggf. weitere von der Ladesäule 3 übermittelte Informationen (z.B. eine Logdatei) in dem Fehlerspeicher 6.

### Bezugszeichenliste

- 1: Kraftfahrzeug
- 2: Erste Funktionseinheit
- 3: Zweite Funktionseinheit
- 4: Datenverbindung
- 5: Fehlerdiagnosevorrichtung
- 6: Fehlerspeicher
- 7: Datenbus

## Patentansprüche

1. Verfahren zur Fehlerdiagnose für ein Kraftfahrzeug, wobei das Kraftfahrzeug ein Elektrofahrzeug (1) ist, wobei das Kraftfahrzeug (1) eine erste Funktionseinheit (2) umfasst, wobei die erste Funktionseinheit (2) eingerichtet ist, mit einer zweiten Funktionseinheit (3) zusammenzuwirken, wobei die zweite Funktionseinheit (3) nicht Bestandteil des Kraftfahrzeugs (1) ist, wobei die erste Funktionseinheit ein Ladegerät (2) und die zweite Funktionseinheit eine Ladesäule (3) ist, wobei die erste (2) und zweite Funktionseinheit (3) mittels eines Ladekabels (4) miteinander verbunden sind, wobei das Ladekabel (4) so ausgestaltet ist, dass über eine Datenverbindung des Ladekabels (4) Informationen ausgetauscht werden können, wobei das Kraftfahrzeug (1) eine Fehlerdiagnosevorrichtung (5) umfasst, wobei das Ladegerät (2) mit der Fehlerdiagnosevorrichtung (5) mittels eines Datenbusses (7) verbunden ist, **gekennzeichnet durch** die durch die Fehlerdiagnosevorrichtung (5) aufeinanderfolgend durchgeführten Schritte
• Erkennen eines im Zusammenwirken der ersten (2) und der zweiten Funktionseinheit (3) aufgetretenen oder auftretenden Fehlers, wobei der Fehler ein unerwartetes Abbrechen eines Ladevorgangs ist, wobei die Datenverbindung des Ladekabels (4) nach wie vor funktioniert,
• Durchführen einer Eigen-Fehlerdiagnose des Ladegeräts (2) und dadurch Feststellen, ob eine Fehlerquelle des Fehlers außerhalb der ersten Funktionseinheit (2) liegt oder nicht,
• Veranlassen des Ladegeräts (2), über die Datenverbindung des Ladekabels (4) einen Diagnosebefehl zur Durchführung einer Eigendiagnose an die Ladesäule (3) zu senden,
• Empfangen, von dem Ladegerät (2) über den Datenbus (7), von durch die Ladesäule (3) mittels der Eigendiagnose der Ladesäule (3) ermittelten und über die Datenverbindung des Ladekabels (4) an das Ladegerät gemeldeten Diagnose-Informationen,
• Speichern der Fehlerquelle des Fehlers in einem Fehlerspeicher (6).

2. Verfahren nach Anspruch 1 mit dem Schritt
• Speichern der Fehlerursache und / oder des Fehlerverlaufs des Fehlers in einem Fehlerspeicher (6).

3. Verfahren nach einem der vorhergehenden Ansprüche, mit dem Schritt
• Empfangen einer Anweisung zum Auslösen der Fehlerdiagnose.

4. Verfahren nach einem der vorhergehenden Ansprüche, mit den Schritten
• Empfangen einer Anweisung zum Übertragen eines Inhalts des Fehlerspeichers (6) und
• Übertragen des Inhalts des Fehlerspeichers (6).

5. System zur Fehlerdiagnose für ein Elektrofahrzeug umfassend ein Kraftfahrzeug (1), wobei das Kraftfahrzeug ein Elektrofahrzeug (1) ist, umfassend eine erste Funktionseinheit (2), welche eingerichtet ist, mit einer zweiten Funktionseinheit (3) zusammenzuwirken, wobei die zweite Funktionseinheit (3) nicht Bestandteil des Kraftfahrzeugs (1) ist, wobei die erste Funktionseinheit (2) ein Ladegerät (2) und die zweite Funktionseinheit (3) eine Ladesäule (3) ist, wobei die erste (2) und zweite Funktionseinheit (3) mittels eines Ladekabels (4) miteinander verbindbar sind, wobei das Ladekabel (4) so ausgestaltet ist, dass über eine Datenverbindung des Ladekabels (4) Informationen ausgetauscht werden können, das Kraftfahrzeug (1) weiter umfassend eine Fehlerdiagnosevorrichtung (5), wobei das Ladegerät (2) mit der Fehlerdiagnosevorrichtung (5) mittels eines Datenbusses (7) verbunden ist, **dadurch gekennzeichnet, dass** die Fehlerdiagnosevorrichtung (5) eingerichtet ist,
• einen im Zusammenwirken der ersten (2) und der zweiten Funktionseinheit (3) aufgetretenen oder auftretenden Fehler zu erkennen, wobei der Fehler ein unerwartetes Abbrechen eines Ladevorgangs ist, wobei die Datenverbindung des Ladekabels (4) nach wie vor funktioniert,
• eine Eigen-Fehlerdiagnose des Ladegeräts (2) durchzuführen und dadurch festzustellen, ob eine Fehlerquelle des Fehlers außerhalb der ersten Funktionseinheit (2) liegt oder nicht,
• das Ladegerät (2) zu veranlassen, über die Datenverbindung des Ladekabels (4) einen Diagnosebefehl zur Durchführung einer Eigendiagnose an die Ladesäule (3) zu senden,
• über den Datenbus (7) von dem Ladegerät (2) durch die Ladesäule (3) mittels der Eigendiagnose der Ladesäule (3) ermittelte und über die Datenverbindung des Ladekabels (4) an das Ladegerät gemeldete Diagnose-Informationen zu empfangen,
• die Fehlerquelle des Fehlers in einem Fehlerspeicher (6) zu speichern, und die Ladesäule (3), wobei die Ladesäule (3) eingerichtet ist,
• über die Datenverbindung des Ladekabels (4) einen Diagnosebefehl zur Durchführung einer Eigendiagnose zu empfangen,
• eine Eigendiagnose durchzuführen und
• mittels der Eigendiagnose der Ladesäule (3) ermittelte Diagnose-Informationen über die Datenverbindung des Ladekabels (4) an das Ladegerät (2) zu melden.

6. System nach Anspruch 5, wobei die erste Funktionseinheit (2) die Fehlerdiagnosevorrichtung (5) umfasst.

7. System nach Anspruch 5 oder 6, wobei der Fehlerspeicher eine eigenständige Funktionseinheit (6) des Kraftfahrzeugs (1) ist.

8. System nach Anspruch 5 oder 6, wobei die erste Funktionseinheit (2) den Fehlerspeicher (6) umfasst.

9. System nach Anspruch 5 oder 6, aufweisend eine Datenschnittstelle, wobei der Fehlerspeicher (6) mittels der Datenschnittstelle mit der Fehlerdiagnosevorrichtung (5) verbindbar ist.

10. System nach einem der Ansprüche 5 bis 9, wobei die Fehlerdiagnosevorrichtung (5) eingerichtet ist, im Ansprechen auf einen Diagnosebefehl das Verfahren zur Fehlerdiagnose nach Anspruch 3 durchzuführen.

## Claims

1. Fault diagnosis method for a motor vehicle, wherein the motor vehicle is an electric vehicle (1), wherein the motor vehicle (1) comprises a first function unit (2), wherein the first function unit (2) is configured to interact with a second function unit (3), wherein the second function unit (3) is not a component of the motor vehicle (1), wherein the first function unit is a charger (2) and the second function unit is a charging pillar (3), wherein the first function unit (2) and the second function unit (3) are connected to one another by means of a charging cable (4), wherein the charging cable (4) is configured in such a way that information can be exchanged via a data connection of the charging cable (4), wherein the motor vehicle (1) comprises a fault diagnosis device (5), wherein the charger (2) is connected to the fault diagnosis device (5) by means of a data bus (7), **characterized by** the steps which are successively carried out by the fault diagnosis device (5) :
• detecting a fault which has occurred or is occurring in combination with the first function unit (2) and the second function unit (3), wherein the fault is unexpected aborting of a charging process, wherein the data connection of the charging cable (4) continues to function as before,
• carrying out self-diagnosis for faults of the charger (2) and as a result determining whether a fault source of the fault lies outside the first function unit (2) or not,
• causing the charger (2) to transmit, via the data connection of the charging cable (4), a diagnostic command to carry out self-diagnosis to the charging pillar (3),
• receiving, from the charger (2), via the data bus (7) diagnostic information which is determined by the charging pillar (3) by means of the self-diagnosis of the charging pillar (3) and is signalled to the charger via the data connection of the charging cable (4),
• storing the fault source of the fault in a fault memory (6).

2. Method according to Claim 1, comprising the step:
• storing the cause of the fault and/or the fault progression of the fault in a fault memory (6).

3. Method according to either of the preceding claims, comprising the step:
• receiving an instruction to trigger the fault diagnosis.

4. Method according to one of the preceding claims, comprising the steps:
• receiving an instruction to transmit contents of the fault memory (6), and
• transmitting the contents of the fault memory (6) .

5. Fault diagnosis system for an electric vehicle, comprising a motor vehicle (1), wherein the motor vehicle is an electric vehicle (1), comprising a first function unit (2) which is configured to interact with a second function unit (3), wherein the second function unit (3) is not a component of the motor vehicle (1), wherein the first function unit (2) is a charger (2), and the second function unit (3) is a charging pillar (3), wherein the first function unit (2) and the second function unit (3) can be connected to one another by means of a charging cable (4), wherein the charging cable (4) is configured in such a way that information can be exchanged via a data connection of the charging cable (4), the motor vehicle (1) also comprising a fault diagnosis device (5), wherein the charger (2) is connected to the fault diagnosis device (5) by means of a data bus (7), **characterized in that** the fault diagnosis device (5) is configured
• to detect a fault which has occurred or is occurring in combination with the first function unit (2) and second function unit (3), wherein the fault is unexpected aborting of a charging process, wherein the data connection of the charging cable (4) continues to function as before,
• to carry out self-diagnosis for faults of the charger (2) and as a result to determine whether a fault source of the fault lies outside the first function unit (2) or not,
• to cause the charger (2) to transmit, via the data connection of the charging cable (4), a diagnostic command to carry out self-diagnosis to the charging pillar (3),
• to receive, from the charger (2) via the data bus (7), diagnostic information which is determined by the charging pillar (3) by means of the self-diagnosis of the charging pillar (3) and is signalled to the charger via the data connection of the charging cable (4),
• to store the fault source of the fault in a fault memory (6),
and the charging pillar (3), wherein the charging pillar (3) is configured
• to receive, via the data connection of the charging cable (4), a diagnostic command to carry out self-diagnosis,
• to carry out self-diagnosis, and
• to signal, via the data connection of the charging cable (4), diagnostic information which has been determined by means of the self-diagnosis of the charging pillar (3), to the charger (2).

6. System according to Claim 5, wherein the first function unit (2) comprises the fault diagnosis device (5) .

7. System according to Claim 5 or 6, wherein the fault memory is an independent function unit (6) of the motor vehicle (1).

8. System according to Claim 5 or 6, wherein the first function unit (2) comprises the fault memory (6).

9. System according to Claim 5 or 6, having a data interface, wherein the fault memory (6) can be connected to the fault diagnosis device (5) by means of the data interface.

10. System according to one of Claims 5 to 9, wherein the fault diagnosis device (5) is configured to carry out the fault diagnosis method according to Claim 3 in response to a diagnostic command.

## Revendications

1. Procédé de diagnostic de défaillances pour un véhicule automobile, le véhicule automobile étant un véhicule électrique (1), dans lequel le véhicule automobile (1) comprend une première unité fonctionnelle (2), la première unité fonctionnelle (2) étant conçue pour coopérer avec une deuxième unité fonctionnelle (3), la deuxième unité fonctionnelle (3) ne faisant pas partie du véhicule automobile (1), dans lequel la première unité fonctionnelle est un dispositif de chargement (2) et la deuxième unité fonctionnelle est une borne de recharge (3), la première (2) et la deuxième unité fonctionnelle (3) étant reliées au moyen d'un câble de charge (4), dans lequel le câble de charge (4) est configuré de telle sorte que des informations peuvent être échangées sur une liaison de données du câble de charge (4), dans lequel le véhicule automobile (1) comprend un dispositif de diagnostic de défaillances (5), le dispositif de chargement (2) étant relié au dispositif de diagnostic de défaillances (5) au moyen d'un bus de données (7), **caractérisé par** les étapes effectuées successivement par le dispositif de diagnostic de défaillances (5) et consistant à
• reconnaître une défaillance survenue ou en train de survenir en relation avec la première (2) et la deuxième unité fonctionnelle (3), la défaillance étant un arrêt inattendu d'une opération de chargement, la liaison de données du câble de charge (4) étant toujours fonctionnelle,
• effectuer un autodiagnostic de défaillance par le dispositif de chargement (2) et déterminer ainsi si une source de défaillance de la défaillance est située à l'extérieur de la première unité fonctionnelle (2) ou non,
• faire que le dispositif de chargement (2) envoie un ordre de diagnostic pour effectuer un autodiagnostic à la borne de recharge (3) par l'intermédiaire de la liaison de données du câble de charge (4),
• recevoir du dispositif de chargement (2), par l'intermédiaire du bus de données (7), des informations de diagnostic déterminées par la borne de recharge (3) au moyen de l'autodiagnostic de la borne de recharge (3) et signalées au dispositif de chargement par l'intermédiaire de la liaison de données du câble de charge (4),
• stocker la source de défaillance de la défaillance dans une mémoire de défaillances (6).

2. Procédé selon la revendication 1, comprenant l'étape consistant à
• stocker la source de défaillance et/ou le déroulement de défaillance de la défaillance dans une mémoire de défaillances (6).

3. Procédé selon l'une quelconque des revendications précédentes, comprenant l'étape consistant à
• recevoir une instruction pour déclencher le diagnostic de défaillances.

4. Procédé selon l'une quelconque des revendications précédentes, comprenant les étapes consistant à
• recevoir une instruction de transmettre un contenu de la mémoire de défaillances (6), et
• transmettre le contenu de la mémoire de défaillance (6).

5. Système de diagnostic de défaillances pour un véhicule électrique, comprenant un véhicule automobile (1), le véhicule automobile étant un véhicule électrique (1), comprenant une première unité fonctionnelle (2) qui est conçue pour coopérer avec une deuxième unité fonctionnelle (3), la deuxième unité fonctionnelle (3) ne faisant pas partie du véhicule automobile (1), dans lequel la première unité fonctionnelle (2) est un dispositif de chargement (2) et la deuxième unité fonctionnelle (3) est une borne de recharge (3), la première (2) et la deuxième unité fonctionnelle (3) pouvant être reliées l'une à l'autre au moyen d'un câble de charge (4), dans lequel le câble de charge (4) est configuré de telle sorte que des informations peuvent être échangées sur une liaison de données du câble de charge (4), le véhicule automobile (1) comprenant en outre un dispositif de diagnostic de défaillance (5), le dispositif de chargement (2) étant relié au dispositif de diagnostic de défaillance (5) au moyen d'un bus de données (7), **caractérisé en ce que** le dispositif de diagnostic de défaillance (5) est conçu pour
• reconnaître une défaillance survenue ou en train de survenir en relation avec la première (2) et la deuxième unité fonctionnelle (3), la défaillance étant un arrêt inattendu d'une opération de chargement, la liaison de données du câble de charge (4) étant toujours fonctionnelle,
• effectuer un autodiagnostic de défaillance du dispositif de chargement (2) et déterminer ainsi si une source de défaillance de la défaillance est située à l'extérieur de la première unité fonctionnelle (2) ou non,
• faire que le dispositif de chargement (2) envoie un ordre de diagnostic pour effectuer un autodiagnostic à la borne de recharge (3) par l'intermédiaire de la liaison de données du câble de charge (4),
• recevoir du dispositif de chargement (2), par l'intermédiaire du bus de données (7), des informations de diagnostic déterminées par la borne de recharge (3) au moyen de l'autodiagnostic de la borne de recharge (3) et signalées au dispositif de chargement par l'intermédiaire de la liaison de données du câble de charge (4),
• stocker la source de défaillance de la défaillance dans une mémoire de défaillances (6), et la borne de recharge (3), la borne de recharge (3) étant conçue pour
• recevoir par l'intermédiaire de la liaison de données du câble de charge (4) un ordre de diagnostic pour effectuer un autodiagnostic,
• effectuer un autodiagnostic, et
• signaler au dispositif de chargement (2) des informations de diagnostic déterminées au moyen de l'autodiagnostic de la borne de recharge (3), par l'intermédiaire de la liaison de données du câble de charge (4).

6. Système selon la revendication 5, dans lequel la première unité fonctionnelle (2) comprend le dispositif de diagnostic de défaillance (5).

7. Système selon la revendication 5 ou 6, dans lequel la mémoire de défaillances est une unité fonctionnelle autonome (6) du véhicule automobile (1).

8. Système selon la revendication 5 ou 6, dans lequel la première unité fonctionnelle (2) comprend la mémoire de défaillances (6).

9. Système selon la revendication 5 ou 6, présentant une interface de données, la mémoire de défaillances (6) pouvant être reliée au dispositif de diagnostic de défaillance (5) au moyen de l'interface de données.

10. Système selon l'une quelconque des revendications 5 à 9, dans lequel le dispositif de diagnostic de défaillance (5) est conçu pour effectuer le procédé de diagnostic de défaillances selon la revendication 3 en réaction à un ordre de diagnostic.
